# EUROPEAN PATENT APPLICATION

(11) **EP 3 796 564 A1**
(43) Date of publication of application: **24.03.2021**
(21) Application number: 19465559.3
(22) Date of filing: 18.09.2019
(51) Int. Cl.: H04B 5/00, G06K 7/10, G06K 19/077, H01Q 1/22, H04W 4/80, H04W 12/06, H04W 76/14

(54) **METHOD FOR DETECTING A REMOVAL OF A NFC-COUNTERPART**

(71) Applicant: Continental Automotive GmbH, 30165 Hannover (DE)
(72) Inventor: Burlacu, Bogdan Alexandru, 300756 Timisoara (RO); Craciun, Serban, 300687 Timisoara (RO); Orbu, Alexandra, 220149 Drobeta Turnu Severin (RO); Saracin, Cristian, 300446 Timisoara (RO)
(74) Representative: Continental Corporation

(57) **Abstract**

The invention relates to a method for detecting a removal of a NFC-counterpart, comprising the steps:
performing a polling cycle by a NFC-reader for detecting the NFC-counterpart;
performing a NFC-pairing for pairing the NFC-reader with the NFC-counterpart;
monitoring a development over time (t) of an impedance of an NFC-antenna of the NFC-reader; and
detecting a removal of the NFC-counterpart dependent on the monitored development over time (t) of the impedance of the NFC-antenna of the NFC-reader.

## Description

Known methods to detect a removal of a NFC-counterpart from a NFC-reader in R/W-mode (read mode and/or write mode) or P2P-mode (peer to peer mode) comprise the following steps. In a first step, the initiator sends PDUs (Packet Data Units) to the counterpart and awaits a response. If no response is received in a specific response time, it is concluded that the NFC-counterpart has been removed. In a second step, the initiator puts the NFC-counterpart in sleep mode and activates it back periodically. If the activation fails, it is concluded that the NFC-counterpart has been removed. All existing presence check methods involve NFC data communication.

However, the initiator needs to admit our continuous NFC field. If an NFC active communication is used, it means that also the target meets an NFC field, and if the target is a smart phone, it will drain the battery of the smart phone. Additionally, if the counterpart is a smart phone, their smart phone will ring each time a new activation is performed.

In a typical use-case inside a vehicle, a NFC-reader activates a polling cycle for detecting counterparts. When the NFC-counterpart is detected, its type is identified and the corresponding use-case is performed, for example Bluetooth pairing, Wi-Fi pairing, android beam and/or car start. After that, the NFC-reader waits for removal of the NFC-counterpart. This is the scenario is then repeated from the beginning.

For example, it is requested to design NFC-readers placed inside the vehicle, which have a mobile holder, where the user is able to leave the smart phone. Typically, an NFC use-case is performed in less than five seconds, but the user could leave the smart phone on the holder long after the use-case is performed. In this case, the NFC datalink usually remains active without any useful data actually being transferred. This leads to power consumption and/or heating of the devices.

There is a need for an improved method for detecting the removal of an NFC-counterpart, which optimizes the power consumption and user experience. This objective is achieved by a method according to the claim 1 and a device according to claim 15.

Further preferred embodiments are evident from the dependent patent claims.

According to an aspect, the method for detecting a removal of a NFC-counterpart comprises the steps performing a polling cycle by a NFC-reader for detecting the NFC-counterpart, performing a NFC-pairing for pairing the NFC-reader with the NFC-counterpart, thereby establishing a continuous NFC-communication between the NFC-reader and the NFC-counterpart for a use-case, monitoring a development over time of an impedance of an NFC-antenna of the NFC-reader and detecting a removal of the NFC-counterpart dependent on the monitored development over time of the impedance of the NFC-antenna of the NFC-reader.

When the NFC-counterpart is connected and/or placed in the close proximity of the NFC-antenna, the NFC-counterpart influences the internal resonant circuit of the NFC-antenna. This leads to a detuning of the antenna impedance. The detuning of the antenna impedance comprises a shift of the antenna impedance. The antenna detuning can be detected by monitoring a development of the current through the NCF-antenna or a development of the voltage across the NFC-antenna.

The term "NFC", as used herein, relates to near-field communication, which is a set of communication protocols that enable two electronic devices, a NFC-reader and a NFC-counterpart, to establish communication by bringing them near each other, preferably closer than 4 cm of each other.

The term "NFC-pairing", as used herein, comprises connecting of an NFC-reader with an NFC-counterpart, for example, Bluetooth pairing, Wi-Fi pairing, android beam and/or paring for a car start. The term can also be described as NFC-use-case.

The term "use-case", as used herein, comprises any application, which is implemented by using NFC technology. For example, when the NFC-reader is integrated into a vehicle and the NFC-counterpart is integrated in a key for the vehicle, the use-case for example is the automatic opening of the vehicle, when the key is near the vehicle. Such a use-case, as many use-cases, in particular in the field of automotive, is done under five seconds after pairing the NFC-reader with the NFC-counterpart.

The term "RF-field", as used herein, relates to radio frequency field with a frequency range from around 20kHz to around 300GHz
Preferably, when it is detected that the NFC-counterpart has been removed, the NFC-reader resumes performing the polling cycle.

Thus, a power consumption of the NFC-reader and the NFC-counterpart, preferably a smartphone, while performing a presence check is decreased.

Thus, heating of the NFC-reader and the NFC-counterpart, preferably a smartphone, is decreased.

In case of the NFC-counterpart being a smartphone, since no NFC-communication is performed while presence checking, the smartphone will not vibrate while presence checking.

Most of the NFC transceivers present a feature, which can measure some of the NFC-antenna parameters, thus no additional devices are necessary to implement the method.

In addition, no data communication is involved for presence checking, thus a fail result due to a protocol error can be distinguished.

Thus, an improved method for detecting the removal of the NFC-counterpart from the NFC-reader is provided.

In a preferred embodiment, the method comprises the step of stopping a continuous NFC-communication between the NFC-reader and the NFC-counterpart after the use-case is performed. Thus, no more Packet Data Units are communicated between the NFC-reader and the NFC-counterpart.

The removal detection of the provided method is dependent on the development of the impedance of the NFC-antenna. Thus, no NFC-communication between the NFC-reader and the NFC-counterpart is needed to detect the removal of the NFC-counterpart from the NFC-reader. This helps reducing the power consumption and the heating of the NFC-reader and the NFC-counterpart.

Thus, an improved method for detecting the removal of the NFC-counterpart from the NFC-reader is provided.

In a preferred embodiment, monitoring a development over time of the impedance of the NFC-antenna of the NFC-reader comprises the steps applying an RF-field on the NFC-antenna, determining at least two values of an impedance parameter, which are linked with the impedance of the NFC-antenna, at different time points and determining a removal of the NFC-counterpart dependent on the determined at least two values of the impedance parameter.

Comparing a difference between two subsequent impedance parameters with a predetermined threshold allows for a simple implementation of monitoring the development of the impedance of the NFC-reader over time.

Thus, an improved method for detecting the removal of the NFC-counterpart from the NFC-reader is provided.

In a preferred embodiment, determining a removal of the NFC-counterpart dependent on the determined at least two values of the impedance parameter comprises the steps determining a delta value between the at least two values of the impedance parameter, wherein the delta value indicates a difference between the at least two values and determining a removal of the NFC-counterpart, if the determined delta value exceeds a predetermined threshold.

Preferably, the threshold is in a range of 5%-10% of one of the at least two values of the impedance parameters.

Preferably, the threshold is determined by 5% of one of the at least two values of the impedance parameters.

Alternatively, the threshold comprises a fixed threshold. For example, the threshold comprises the fixed value of 20mA.

Preferably, the threshold is determined dependent on a general impedance consumption of the NFC-antenna.

In a preferred embodiment, determining a removal of the NFC-counterpart dependent on the determined at least two values of the impedance parameter comprises determining a median of the at least two values of the impedance parameter and determining a removal of the NFC-counterpart, if the determined median exceeds a predetermined threshold.

Preferably, the threshold is in a range of 5%-10% of the determined median compared with an earlier determined median.

In a preferred embodiment, the impedance parameter comprises a current flowing through the NFC-antenna and/or a voltage over the NFC-antenna.

The current flowing through the NFC-antenna when an RF-field is applied to the NFC-antenna is indirectly proportional to the impedance of the NFC-antenna. Additionally, the voltage across in the NFC-antenna, when an RF field is applied to the NFC-antenna is directly proportional to the impedance of the NFC-antenna. Thus, a change of the current through the NFC-antenna or the voltage across the NFC-antenna directly indicates a change of the impedance of the NFC-antenna.

Instead of the median of the measured current values, alternatively an average and or a gradient of the delta values can be analysed to detect the detuning of the NFC-antenna, preferably ignoring outlier values from interference effects.

Thus, a detection of a removal of the NFC-counterpart from the NFC-reader dependent on a development over time of the impedance of the NFC-antenna can be implemented by monitoring development over time of the current through the NFC-antenna or a voltage across the NFC-antenna. The current through the NFC-antenna or the voltage across the NFC-antenna are impedance parameters, which are relatively easy to obtain.

In a preferred embodiment, the RF-field is applied for up to 50us.

A relatively short RF-field is enough to determine the current flowing through the NFC-antenna or the voltage over the NFC-antenna.

The RF-field preferably is dimensioned in view of power consumption. The strength, length and/or frequency is preferably dimensioned to minimize the power consumption and simultaneously is suited to provide a current in the NFC-antenna that reliably relates to the impedance of the NFC-antenna.

Thus, an improved method for detecting the removal of the NFC-counterpart from the NFC-reader is provided.

Preferably, the RF-field is reapplied every 200ms. Compared to the length of the RF-field lying in the magnitude of microseconds, the rate with which the RF-field is reapplied lies in a higher magnitude of milliseconds. Thus, the power consumption of the applied RF-field is negligible.

Thus, an improved method for detecting the removal of the NFC-counterpart from the NFC-reader is provided.

According to an aspect, a device is provided, configured for executing a method, as described herein.

According to an aspect, a computer program is provided, comprising instructions which, when the program is executed by a computer, cause the computer to carry out the method, as described herein.

According to an aspect, a computer-readable data carrier is provided having stored there on the computer program, as described herein.

The subject matter of the invention will be explained in more detail in the following text with reference to preferred exemplary embodiments, which are illustrated in the attached drawings, in which:
- Fig.1: schematically shows a method for detecting a removal of a NFC-counterpart;
- Fig.2: schematically shows measured current values of an NFC-antenna of the NFC-reader;
- Fig.3a: schematically shows measured further current values of an NFC-antenna of the NFC-reader; and
- Fig.3b: shows a table of the exact measured further current values of an NFC-antenna of the NFC-reader.

The reference symbols used in the drawings, and their meanings, are listed in summary form in the list of reference symbols. In principle, identical parts are provided with the same reference symbols in the figures.

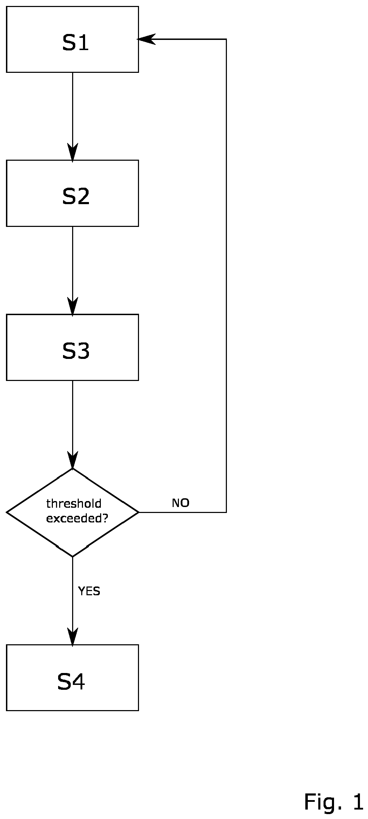

Fig.1 schematically shows a method for detecting a removal of a NFC-counterpart. In step S1, a polling cycle is performed by a NFC-reader for detecting the NFC-counterpart. In step S2, a NFC-pairing is performed for pairing the NFC-reader with the NFC-counterpart thereby establishing a continuous NFC-communication between the NFC-reader and the NFC-counterpart for a use-case. In step S3, a development over time t of an impedance of an NFC-antenna of the NFC-reader is monitored. From step S3 to step S4, a removal of the NFC-counterpart is detected dependent on the monitored development over time t of the impedance of the NFC-antenna of the NFC-reader. In this case, subsequent impedance values of the NFC-antenna, which were measured overtime t, are compared. If the difference, in other words a delta value, between two subsequent impedance values exceed a predetermined threshold is determined in step S4, the removal of the NFC-counterpart is detected. If the difference between two subsequent impedance values does not exceed the predetermined threshold, there method jumps to step S1, where polling starts again.

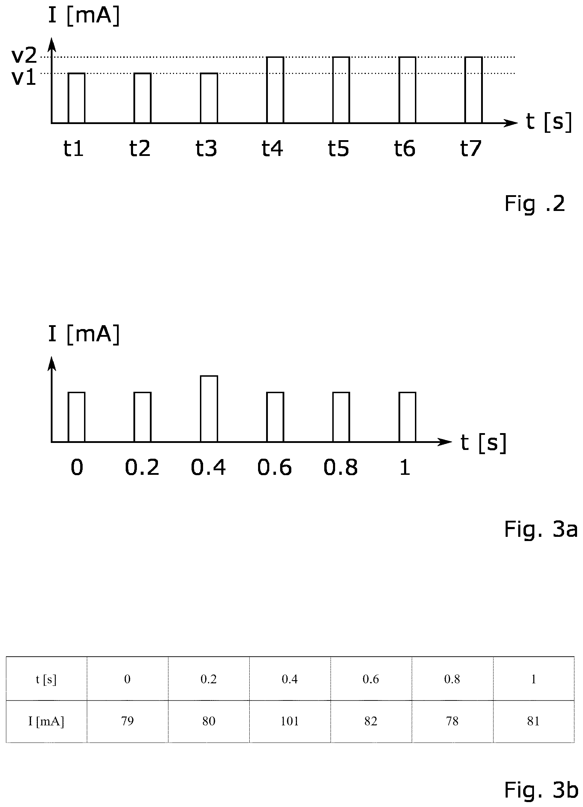

Fig.2 schematically shows measured current values of an NFC-antenna of the NFC-reader.

In this case, the impedance parameter, which is linked with the impedance of the NFC-antenna, is the current I flowing through the NFC-antenna. Fig. 2 shows the measurement of seven values of the current I of the NFC-antenna at seven different time points t1, t2, t3, t4, t5, t6 and t7. At a first time point t1, a second time point t2 and a third time point t3, the current I of the NFC-antenna has a first value v1. At a fourth time point t4, a fifth time point t5, a sixth time point t6 and a seventh time point t7 the current I of the NFC-antenna has a second value v2. The second value v2 is bigger than the first value v1. For example, the first value v1 is 80mA and the second value v2 is 100mA.

The current I flowing through the NFC-antenna directly relates to the impedance of the NFC-antenna. The relationship between the impedance of the NFC-antenna and the current I of the NFC-antenna is inversely proportional.

In order to detect, if an NFC-counterpart is still present near the NFC-reader or if the NFC-counterpart has been removed, a short RF-field is sent on the NFC. The measured current I flowing through the NFC-antenna is a direct consequence of the provided RF-field. The amount of current I flowing through the NFC-antenna is dependent on the impedance of the NFC-antenna. Whenever the NFC-counterpart is near the NFC-reader, the NFC-counterpart leads to a detuning of the impedance of the NFC-antenna. In this case, whenever the NFC-counterpart is near the NFC-reader, the detuning of the impedance of the NFC-antenna leads to a reduction of the impedance of the NFC-antenna. Thus, this leads to an increase of current I flowing through the NFC-antenna when applying the RF field.

In the ideal case, which is shown in fig. 2, it can be concluded, that when the current I has the first value v1, the NFC-counterpart is still near the NFC-reader. However, when the current I has the second value v2, the NFC-counterpart most likely has been removed from the near field of the NFC-reader. This is, because the second value v2 exceeds a predetermined threshold of 5% of the first value v1. In this example, where the first value v1 is 80mA, the predetermined threshold the value of 4mA. The difference between the first value v1 and the second value v2 is 20mA. This delta value of 20mA is thus exceeding the threshold of 4mA.

In the simplest implementation, the measured value of the current I of any time point is compared with the measured value of the current I of the subsequent time point. In other words, the measured value of the current I at the first time point t1 is compared with the measured value of the current I at the second time point t2. Afterwards, the measured value of the current I at the second time point t2 is compared with the measured value of the current I at the third time point t3, and so on. In this case, the measured value of the current I at the third time point t3 compared with the measured value of the current I at fourth time point t4 results in a difference exceeding the predetermined threshold. At this point, a removal of the NFC-counterpart from the NFC-antenna is determined.

Fig.3a schematically shows measured further current values of an NFC-antenna of the NFC-reader.

The values of the current I shown in fig. 3a and fig. 3b follow the same systematic as the values of the current I in fig. 2. In this example, the provided RF field on the NFC-antenna is provided for 50 µs. Thus, every shown peak of current I has a width of 50 µs. The current I is measured every 200ms, leading to six different values of the current I of the NFC-antenna. In line with the example shown in fig. 2, a current I of about 80mA is expected, when the NFC-counterpart is near the NFC-reader. Thus, in line with the example shown in fig. 2, a current I of about 100mA is expected, when the NFC-counterpart has been removed from the near field of the NFC-reader.

In contrast to the example shown in fig. 2, the detection of a removal of the NFC-counterpart from the NFC-reader is dependent on the median of a plurality of measured current values flowing through the NFC-antenna. The table, shown in fig. 3b, comprises the exact measured current values of an NFC-antenna of the NFC-reader. In this case, there current values of the current I measured within one second is analysed. In the timeframe of one second, the current I of the NFC-antenna as the values 79mA, 80mA, 101mA, 82mA, 78mA and 81mA. Using a method, only comparing two subsequent measured values of the current I would have determined that the NFC-counterpart was removed from the NFC-reader at the time point of 0.4 seconds. However, as can be seen in table of fig. 3b, the measured current value of 101mA at 0.4 seconds seems to be an outlier, most likely caused by interference variation, for example from another NFC-counterpart. The median of the measured current values can be determined with 80.5mA. The difference of this median from the expected value of 80mA does not exceed the predetermined threshold of 5% of the expected value of 80mA. Thus, the median of the measured current values, in this case, ignores the outlier of 101mA at 0.4 seconds and thus does not determine a false positive, since it is correctly determined that in the NFC-counterpart is still not removed from the NFC-antenna.

In addition to the presented implementations of fig. 2, fig. 3a in fig. 3b the development of the measured current values of the current I flowing through the NFC-antenna can be analysed over a different time window for example two seconds or three seconds. Instead of the median of the measured current values, alternatively the average and or the gradient of the measured current values can be analysed to detect the detuning of the NFC-antenna, preferably ignoring outlier values from interference effects.

Thus, a removal of the NFC-counterpart from the NFC-antenna of the NFC-reader can be detected without a continuous NFC communication between the NFC-reader and the NFC-counterpart.

## Claims

1. Method for detecting a removal of a NFC-counterpart, comprising the steps:
performing (S1) a polling cycle by a NFC-reader for detecting the NFC-counterpart;
performing (S2) a NFC-pairing for pairing the NFC-reader with the NFC-counterpart thereby establishing a continuous NFC-communication between the NFC-reader and the NFC-counterpart for a use-case;
monitoring (S3) a development over time (t) of an impedance of an NFC-antenna of the NFC-reader; and
detecting (S4) a removal of the NFC-counterpart dependent on the monitored development over time (t) of the impedance of the NFC-antenna of the NFC-reader.

2. Method of claim 1, comprising the step:
stopping the continuous NFC-communication between the NFC-reader and the NFC-counterpart after the use-case is performed.

3. Method of any of the preceding claims, wherein,
monitoring a development overtime (t) of the impedance of the NFC-antenna of the NFC-reader comprises:
applying an RF-field on the NFC-antenna;
determining at least two values of an impedance parameter, which are linked with the impedance of the NFC-antenna, at different time points (t1, t2); and
determining a removal of the NFC-counterpart dependent on the determined at least two values of the impedance parameter.

4. Method of claim 3, wherein,
determining a removal of the NFC-counterpart dependent on the determined at least two values of the impedance parameter comprises:
determining a delta value between the at least two values of the impedance parameter, wherein the delta value indicates a difference between the at least two values; and
determining a removal of the NFC-counterpart, if the determined delta value exceeds a predetermined threshold.

5. Method of claim 3, wherein,
determining a removal of the NFC-counterpart dependent on the determined at least two values of the impedance parameter comprises:
determining a median of the at least two values of the impedance parameter; and
determining a removal of the NFC-counterpart, if the determined median exceeds a predetermined threshold.

6. Method of any of the claims 4 or 5, wherein
the impedance parameter comprises a current (I) flowing through the NFC-antenna and/or a voltage over the NFC-antenna.

7. Method of any of the preceding claims, wherein
the RF-field is applied for up to 50us.

8. A device, configured for executing a method of any of the claims 1 to 7.

9. A computer program, comprising instructions, which, when the program is executed by a computer, cause the computer to carry out a method of any of the claims 1 to 7.

10. A computer-readable data carrier having stored there on the computer program of claim 9.
